Europäisches Patentamt

(19) European Patent Office

Office européen des brevets

(11) Numéro de publication: **0 240 416**
**B1**

(12) **FASCICULE DE BREVET EUROPEEN**

(45) Date de publication du fascicule du brevet:
18.07.90

(51) Int. Cl.⁵: **G05G 5/22**, B60N 2/02

(21) Numéro de dépôt: 87400671.1

(22) Date de dépôt: 25.03.87

(54) **Dispositif de commande du déplacement relatif de deux organes, notamment pour siège de véhicule.**

(30) Priorité: 01.04.86 FR 8604614

(43) Date de publication de la demande:
07.10.87 Bulletin 87/41

(45) Mention de la délivrance du brevet:
18.07.90 Bulletin 90/29

(84) Etats contractants désignés:
AT BE CH DE ES GB IT LI LU NL SE

(56) Documents cités:
FR-A- 2 186 904
GB-A- 1 090 770
GB-A- 1 168 790
US-A- 3 411 377

(73) Titulaire: ECIA - EQUIPEMENTS ET COMPOSANTS
POUR L'INDUSTRIE AUTOMOBILE, F-25400 Audincourt
(Doubs)(FR)

(72) Inventeur: Bianchi, François, Combe Saint Germain,
F-25700 Valentigney(FR)
Inventeur: Busa, Denis, 13, rue de Franche Comté,
F-25400 Audincourt(FR)
Inventeur: Fourret, François, 32 rue du Petit Chênois,
F-25200 Montbeliard(FR)

(74) Mandataire: Polus, Camille et al, c/o Cabinet
Lavoix 2, Place d'Estienne d'Orves, F-75441 Paris
Cedex 09(FR)

## Description

La présente invention concerne un dispositif de commande du déplacement relatif de deux organes qui est tout particulièrement adapté aux réglages des sièges et, notamment, des sièges de véhicule automobile.

Les sièges dont le dossier peut être incliné à volonté et/ou éventuellement l'assise peut être également soulevée ou inclinée selon les besoins sont de plus en plus appréciés par les utilisateurs. Il n'en reste pas moins que dans de nombreux cas pour des raisons d'encombrement ou de coût, les véhicules doivent être munis de sièges fixes. Un système connu, (décrit dans le GB-A 1 090 770), de commande du réglage des positions et plus particulièrement de commande de l'inclinaison d'un dossier comporte deux couronnes dentées, centrées sur une même tige de commande et mobiles axialement l'une par rapport à l'autre, et des moyens de commande du déplacement relatif de ces couronnes entre une position en prise, de blocage, des deux organes et une position écartée permettant le déplacement relatif. La tige de commande est la tige d'articulation du dossier et de l'assise. Un tel système fait donc partie de la structure de l'articulation qui relie le dossier à l'assise, de sorte que le constructeur est obligé de prévoir dès l'origine le type d'application auquel est destiné le siège en construction et par suite de disposer de deux lignes de fabrication différentes. En outre, la commande du réglage et, notamment de l'inclinaison du dossier se trouve obligatoirement à proximité de l'articulation ce qui quelquefois et, notamment dans le cas des véhicules automobiles, peut présenter une gêne.

La présente invention a pour but de remédier à ces inconvénients en fournissant un dispositif de commande qui est indépendant de l'articulation entre l'assise et le dossier et qui permet le réglage à partir de tout point désiré.

Cette invention a en effet pour objet un dispositif de commande du déplacement relatif de deux organes lequel dispositif comporte deux couronnes dentées reliées chacune à l'un des organes, centrées sur une même tige de commande et mobiles axialement l'une par rapport à l'autre, et des moyens de commande du déplacement relatif de ces couronnes entre une position en prise, dite position de blocage des deux organes, et une position écartée permettant leur déplacement relatif, caractérisé en ce que le dispositif comporte un flasque fixé sur l'un des organes et portant l'une desdites couronnes dentées qui est traversée librement par la tige de commande; une barre articulée sur l'autre organe et munie d'une denture rectiligne en prise avec un pignon rotatif monté coaxialement sur la tige de commande; une cuvette qui est solidaire du pignon rotatif, porte l'autre couronne dentée, en regard du flasque, et est repoussée élastiquement en direction de ce flasque vers la position d'engrènement des deux couronnes; un plateau d'entraînement monté à l'intérieur de la cuvette et solidaire de la tige de commande; entre le fond de la cuvette et une face en regard du plateau d'entraînement, au moins une bille montée dans l'un de ces éléments et escamotable dans un logement de l'autre, mais susceptible de rouler sur ce dernier pour commander le coulissement de la cuvette sur la tige de sa position de blocage à la position écartée, permettant sa rotation; et des butées d'accouplement du plateau et de la cuvette en position écartée pour l'entraînement de cette dernière en rotation et le déplacement de la barre.

Un tel dispositif peut être monté sur tout-type de siège ou autre sans nécessité de modifications des organes concernés. En outre, la tige de commande peut facilement être disposée à l'endroit le plus approprié.

De préférence, la barre munie d'une denture rectiligne comporte une rainure longitudinale et coulisse le long d'un rail de guidage solidaire du flasque fixe. La sécurité du déplacement ainsi que sa précision sont ainsi renforcées.

La description ci-dessous d'un mode de réalisation donné à titre d'exemple, non limitatif, et représenté aux dessins annexes, fera d'ailleurs ressortir les avantages et caractéristiques de l'invention. Sur ces dessins:

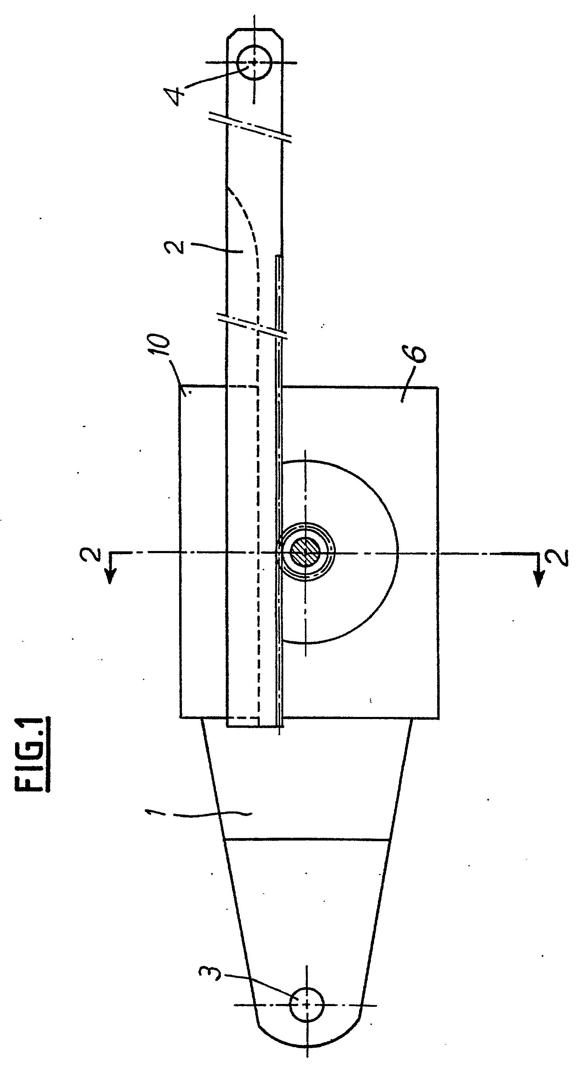

– la Fig. 1 est une vue de côté d'un dispositif selon l'invention;

– la Fig. 2 est une vue en coupe suivant la ligne 2–2 de la Fig. 1 montrant le dispositif en position de repos;

– la Fig. 3 est une vue en coupe suivant la ligne 3–3 de la Fig. 2;

– la Fig. 4 est une vue analogue à la Fig. 3 du dispositif en position d'entraînement ; et

- la Fig.5 est une vue en coupe suivant la ligne 5 - 5 de la Fig.4.

Le dispositif, objet de l'invention est destiné à permettre le déplacement relatif de deux organes, c'est-à-dire généralement le déplacement d'un organe mobile par rapport à un organe fixe. Dans ce but, il comporte un flasque 1 fixé, en 3, sur l'un des organes, par exemple l'assise d'un siège de véhicule, et une barre 2 articulée en 4 sur l'autre organe, constitué, par exemple par le dossier inclinable du siège.

Le flasque 1 est solidaire d'une plaque 6 recourbée en sens inverse à ses deux extrémités de sorte que sa partie inférieure 8 est fixée sur le flasque 1 tandis que sa partie supérieure forme un rail de guidage 10 qui pénètre dans une rainure longitudinale de la barre rectiligne 2.

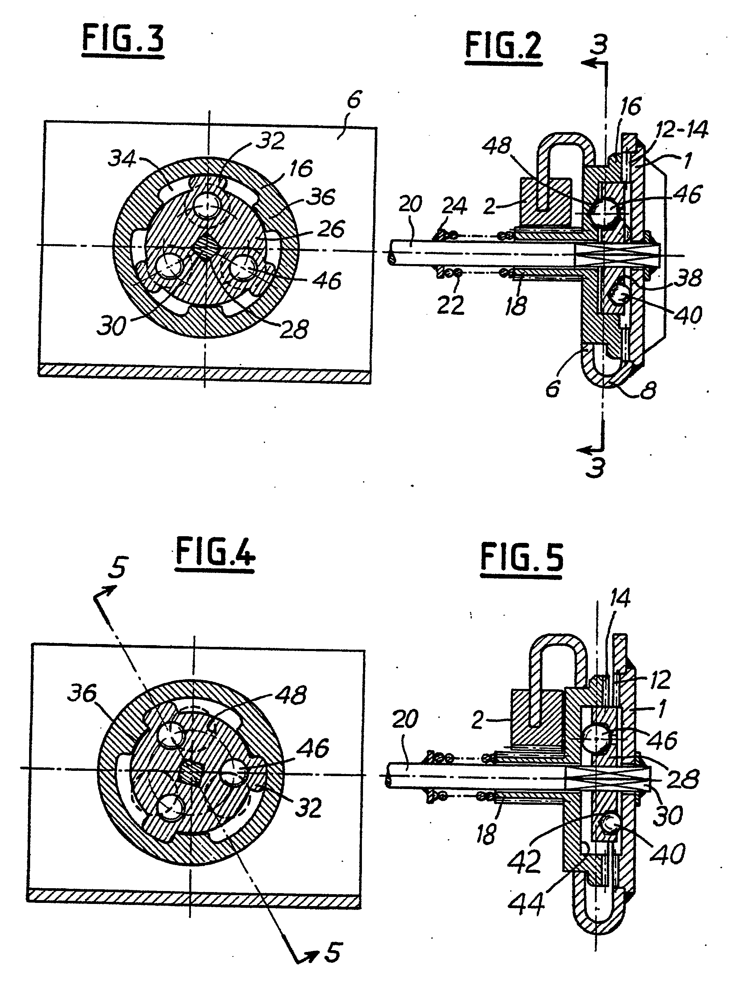

En regard, de cette plaque 6, le flasque 1 porte une couronne dentée 12 qui, dans la position de blocage représentée sur les Fig.2 et 3, est en prise avec une couronne dentée correspondante 14 solidaire d'une cuvette 16 libre en rotation dans une ouverture de la plaque 6. La cuvette 16 est solidaire d'un pignon 18 en prise avec la denture de la barre 2. Le pignon 18 est traversé axialement par une tige de commande 20 qui est supportée librement par le flasque 1 au centre de la couronne dentée 12. Un ressort hélicoïdal 22 entourant la tige 20 est monté entre une rondelle 24 solidaire de cette tige et l'extrémité du pignon 18 de sorte qu'il repousse constamment ce pignon, et par suite la cuvette 16, en direction de la denture 12 du flasque 1, c'est-à-dire vers la position d'immobilisation représentée sur la Fig.2.

A l'intérieur de la cuvette 16, est monté un plateau d'entraînement 26 qui est percé en son centre d'un trou 28 de section carrée dans lequel est emboîté une portion 30 de section correspondante de la tige de commande 20, de sorte que ces deux organes sont solidaires en rotation.

Le plateau 26 comporte sur sa périphérie un certain nombre de taquets 32, trois dans le mode réalisation représenté, qui sont logés chacun dans un évidement 34 de la cuvette 16. L'évidement 34 a une longueur circonférentielle nettement supérieure à celle du taquet 32 de sorte que ce dernier peut se déplacer sur une certaine distance avant d'entrer en contact avec le bord de la nervure 36 qui limite cet évidement.

Le plateau 26 comporte en outre un certain nombre d'encoches dans lesquelles sont montées des billes. Ces encoches sont prévues dans ces deux grandes faces opposées, de sorte que sur sa face 38 en regard du flasque 1, font saillie des billes 40 qui sont simplement en appui sur le flasque. Tandis que, sur sa face 42, en regard du fond 44 de la cuvette 16 des billes 46 pénètrent dans des évidements sensiblement coniques 48 du fond 44 de la cuvette.

Dans la position de repos représentée sur les Fig.2 et 3, les billes 46 sont ainsi solidement maintenues entre le plateau 26 et le fond de la cuvette 16 qui est repoussée par le ressort 22 contre le flasque 1. En outre, comme le montre la Fig.3, les taquets 32 se trouvent pratiquement au milieu des évidements 34 à égale distance des nervures 36.

Lorsque la tige de commande 20 est entraînée en rotation, par exemple au moyen d'un bouton moleté (non représenté) et tourne par rapport au flasque 1 et à la denture 12, le plateau 26 tourne également en entraînant les billes 46 qui roulent vers l'extérieur des logements coniques 32 du fond 44 de la cuvette 16. Le plateau 26 passe alors progressivement de la position représentée sur la Fig.3 à celle représentée sur les Fig.4 et 5. Au cours de ce déplacement, les billes 46 en glissant sur les bords des évidements coniques 48 ont repoussé la cuvette 16 et par suite le manchon 18 axialement le long de la tige de commande 20, de sorte que la denture 14 s'est écartée de la denture 12 (Fig.5). Par ailleurs, chacun des taquets 32 est arrivé à l'extrémité de l'évidement 34 correspondant et est maintenant en contact avec une nervure 36. Si dans ces conditions, la tige de commande 20 continue à tourner, le plateau 26 par l'intermédiaire des taquets 32 et des nervures 36 entraîne la cuvette 16 et le pignon 18, ce qui provoque un déplacement longitudinal de la crémaillère 2 en prise avec ce pignon 18, et par suite un déplacement de l'organe articulé en 4 sur la barre 2.

La rotation de la tige de commande 20 est poursuivie jusqu'au moment où le déplacement désiré a été obtenu. Dès que cette tige est relâchée les billes tendant à retomber d'elles mêmes au fond des évidements, le ressort 22 provoque un déplacement angulaire en sens inverse qui ramène les taquets 32 au centre de l'évidement 34 et remet ainsi immédiatement la cuvette 16 en prise avec la denture 12 du flasque 1, ce qui bloque l'ensemble du dispositif dans la position de réglage choisie. Les taquets 32 ayant été replacés au centre des évidements 34, la tige de commande 20 peut à nouveau être entraînée en rotation dans le sens désiré, que ce soit le sens des aiguilles d'une montre ou le sens inverse, selon le déplacement que l'on a effectué et l'ensemble est totalement réversible.

Il est clair qu'un tel dispositif peut être utilisé chaque fois que l'on désire obtenir le déplacement relatif de deux organes au moyen d'une commande disposée en un point intermédiaire et qu'il peut notamment permettre aussi bien le réglage de l'inclinaison ou de la position en hauteur de l'assise d'un siège que celle de l'inclinaison du dossier mentionnée ci-dessus.

Dans certains cas, toutefois il peut être avantageux de remplacer les encoches du plateau 26 par des évidements tronconiques analogues à ceux du fond de la cuvette 16, de sorte que les billes glissent simultanément sur les bords inclinés des deux évidements en regard. Le déplacement de la cuvette, c'est-à-dire le déverrouillage, est ainsi accéléré. De même, les billes 40 peuvent être remplacées par des rondelles, des patins ou d'autres organes de frottement.

## Revendications

1. Dispositif de commande du déplacement relatif de deux organes lequel dispositif comporte eux couronnes dentées (12, 14) reliées chacune à l'un des organes, centrées sur une même tige de commande (20) et mobiles axialement l'une par rapport à l'autre, et des moyens de commande du déplacement relatif de ces couronnes entre une position en prise, dite position de blocage des deux organes, et une position écartée permettant leur déplacement relatif, caractérisé en ce que le dispositif comporte un flasque (1) fixé sur l'un des organes et portant l'une des dites couronnes dentées (12) qui est traversée librement par la tige de commande (20); une barre (2) articulée sur l'autre organe et munie d'une denture rectiligne en prise avec un pignon rotatif (18) monté coaxialement sur la tige de commande; un cuvette (16) qui est solidaire du pignon rotatif (18), porte l'autre couronne dentée (14), en regard du flasque (1), et est repoussée élastiquement en direction de ce flasque vers la position d'engrênement des deux couronnes; un plateau d'entraînement (26) monté à l'intérieur de la cuvette (16) et solidaire de la tige de commande (20); entre le fond de la cuvette (16) et une face en regard du plateau d'entraînement (26), au moins une bille (46) montée dans l'un de ces éléments et escamotable dans un logement de l'autre, mais susceptible de rouler sur ce dernier pour commander le coulissement de la cuvette sur la tige de sa position de blocage à la position écartée, permettant sa rotation; et des butées (32, 34) d'accouplement du plateau et de la cuvette en position écartée pour l'entraînement de cette dernière en rotation et le déplacement de la barre.

2. Dispositif suivant la revendication 1, caractérisé en ce que la barre (2) munie d'une denture rectiligne comporte une rainure longitudinale de coopération avec un rail de guidage (10) solidaire du flasque fixe (1).

3. Dispositif suivant l'une des revendications 1 et 2, caractérisé en ce que le plateau d'entraînement (26) comporte plusieurs taquets radiaux (32) pénétrant dans des évidements (34) de la cuvette (16) et coopérant avec les bords de ces évidements en vue de l'entraînement en rotation de la cuvette et du pignon.

4. Dispositif suivant l'une des revendications précédentes, caractérisé en ce que le fond (44) de la cuvette (16) comporte au moins un évidement sensiblement conique (48) de réception d'une bille (46) portée par le plateau d'entraînement (26).

5. Dispositif suivant l'une des revendications précédentes, caractérisé en ce que le plateau (26) porte, sur sa face en regard du flasque (1) des organes (40) en saillie d'appui glissant sur ce dernier.

6. Dispositif suivant l'une des revendications 3 à 5, caractérisé en ce qu'en position inactive, lorsque les dents de la cuvette et du flasque sont en prise, les taquets (32) d'entraînement se trouvent en position médiane dans les évidements (34) et peuvent ainsi être déplacés en direction de l'un ou l'autre des bords de cet évidement.

**Patentansprüche**

1. Vorrichtung zum Verstellen von zwei Teilen zueinander mit zwei Zahnkränzen (12, 14), die jeweils mit einem der Teile verbunden sind, auf einer gemeinsamen Betätigungsstange (20) angeordnet sind und axial zueinander beweglich sind, und Betätigungseinrichtungen zum relativen Verstellen der Zahnkränze zwischen einer Eingriffsstellung, in der die beiden Teile blockiert sind, und einer ausgerückten Stellung, die ihre Verstellung zueinander gestattet, gekennzeichnet durch einen Flansch (1), der an einem der Teile befestigt ist und einen der Zahnkränze (12) trägt, der von der Betätigungsstange (20) frei durchquert wird, eine Stange (2), die an dem anderen Teil angelenkt ist und mit einer geradlinigen Verzahnung versehen ist, die mit einem drehbaren Zahnrad (18) in Eingriff ist, das koaxial auf der Betätigungsstange montiert ist, eine dem Flansch (1) gegenüberstehende Schale (16), die mit dem drehbaren Zahnrad (18) fest verbunden ist, den anderen Zahnkranz (14) trägt und elastisch in Richtung auf diesen Flansch auf die Eingriffsstellung der beiden Zahnkränze zu zurückgestoßen wird, eine Antriebsscheibe (26), die im Inneren der Schale (16) angeordnet ist und mit der Betätigungsstange (20) fest verbunden ist, mindestens eine zwischen dem Boden der Schale (16) und einer gegenüberliegenden Seite der Antriebsscheibe (26) angeordnete Kugel (46), die in einem dieser Elemente montiert ist und in eine Aussparung des anderen einrückbar ist, jedoch auf diesem rollen kann, um das Gleiten der Schale auf der Stange aus ihrer blockierten Stellung in die ausgerückte Stellung zu bewirken, die ihre Drehung gestattet, und Anschläge (32, 34) zur Kupplung der Scheibe und der Schale in ausgerückter Stellung, so daß die Schale in Drehung versetzt und die Stange bewegt werden kann.

2. Vorrichtung nach Anspruch 1, dadurch gekennzeichnet, daß die mit einer geradlinigen Verzahnung versehene Stange (2) eine Längsnut zum Zusammenwirken mit einer an dem feststehenden Flansch (1) befestigten Führungsschiene (10) besitzt.

3. Vorrichtung nach einem der Ansprüche 1 und 2, dadurch gekennzeichnet, daß die Antriebsscheibe (26) mehrere radiale Nasen (32) besitzt, die in Aussparungen (34) der Schale (16) eintreten und mit den Rändern dieser Aussparungen zusammenwirken, um die Schale und das Zahnrad in Drehung zu versetzen.

4. Vorrichtung nach einem der vorhergehenden Ansprüche, dadurch gekennzeichnet, daß der Boden (44) der Schale (16) mindestens eine im wesentlichen konische Vertiefung (48) zur Aufnahme einer von der Antriebsscheibe (26) getragenen Kugel (46) besitzt.

5. Vorrichtung nach einem der vorhergehenden Ansprüche, dadurch gekennzeichnet, daß die Scheibe (26) auf ihrer dem Flansch (1) gegenüberstehenden Seite hervorstehende Auflageorgane (40) besitzt, die auf dem Flansch gleiten.

6. Vorrichtung nach einem der Ansprüche 3 bis 5, dadurch gekennzeichnet, daß die Antriebsnasen (32) in der Ruhestellung, wenn die Zähne der Schale und des Flansches in Eingriff sind, eine mittlere Stellung in den Aussparungen (34) einnehmen und sich somit auf einen der Ränder der Aussparung zu bewegen können.

**Claims**

1. Device for controlling the relative displacement of two members, which device comprises two toothed rings (12, 14) which are each connected to one of the members, are centered on the same control rod (20) and are axially movable relative to one another, and means for controlling the relative displacement of these rings between an engaged position, known as the locking position of the two members, and a separated position permitting their relative displacement, characterized in that the device comprises a side wall (1) fixed to one of the members and carrying one of the said toothed rings (12) through which the control rod (20) freely extends; a bar (2) pivotally connected to the other member and provided with rectilinear teeth engaged with a rotary pinion (18) mounted coaxially on the control rod; a cup (16), which is integrally attached to the rotary pinion (18), carries the other toothed ring (14), facing the side wall (1), and is resiliently pushed back in the direction of this side wall towards the meshing position of the two rings; a driving plate (26) mounted inside the cup (16) and integrally attached to the control rod (20); between the end wall of the cup (16) and a facing side of the driving plate (26), at least one ball (46) mounted in one of these elements and retractable into a housing of the other, but capable of rolling on the latter in order to control the sliding of the cup on the rod from its locking position to the separated position, permitting its rotation; and stops (32, 34) for coupling the plate and the cup in the separated position in order to drive the latter in rotation and displace the bar.

2. Device according to Claim 1, characterized in that the bar (2) provided with rectilinear teeth comprises a longitudinal groove for cooperation with a guide rail (10) integrally attached to the fixed side wall (1).

3. Device according to Claim 1 or 2, characterized in that the driving plate (26) comprises a plurality of radial lugs (32) penetrating into cavities (34) in the cup (16) and cooperating with the edges of these cavities for driving the cup and the pinion in rotation.

4. Device according to one of the preceding claims, characterized in that the end wall (44) of the cup (16) has at least one substantially conical recess (48) for receiving a ball (46) carried by the driving plate (26).

5. Device according to one of the preceding claims, characterized in that the plate (26) carries, on its side facing the side wall (1), projecting bearing members (40) which slide on the latter.

6. Device according to one of Claims 3 to 5, characterized in that, in the inoperative position, when the teeth of the cup and of the side wall are in engagement, the driving lugs (32) are in the mid-position in the cavities (34) and can thus be displaced towards either one of the edges of this cavity.

EP 0 240 416 B1

FIG.1

# FIG.3

# FIG.2

# FIG.4

# FIG.5